# EUROPÄISCHE PATENTANMELDUNG

(11) **EP 0 736 413 A1**
(43) Veröffentlichungstag der Anmeldung: **09.10.1996**
(21) Anmeldenummer: 96104845.1
(22) Anmeldetag: 04.07.1992
(51) Int. Cl.: B60N 2/52

(54) **Vorrichtung zur Steigerung des Sitzkomforts bei Fahrzeugen**

(30) Priorität: 05.07.1991 DE 4122247
(62) Teilanmeldung aus: 92913747.9
(71) Anmelder: EBERT, Reinhard, D-97332 Volkach (DE)
(72) Erfinder: EBERT, Reinhard, D-97332 Volkach (DE)
(74) Vertreter: Pöhner, Wilfried Anton, Dr.

(57) **Zusammenfassung**

Vorgeschlagen wird eine Vorrichtung zur Steigerung des Sitzkomforts bei Fahrzeugen, insbesondere Nutzfahrzeugen, wie Traktoren, Lastkraftwagen und Baumaschinen mit einem Fahrzeugaufbau, einer daran befestigten Kabine, in der ein insbesondere mittels einer Scherenmechanik befestigter, relativ dazu annährend vertikal beweglicher Sitz angeordnet ist und einem Fluidgetriebe bestehend aus einem Generator, einer Fluidleitung und einem auf die annähernd vertikalen Sitzbewegungen wirkenden, die vertikale Position des Sitzes verändernden Motor, wobei die Kabine relativ zum Fahrzeugaufbau verschiebbar ist, der Generator durch die Relativbewegung zwischen Fahrzeugaufbau und Kabine angetrieben wird, und der Motor den Abstand Sitz - Kabine proportional dem Abstand Kabine - Fahrzeugaufbau verändert.

## Beschreibung

Die Erfindung betrifft eine Vorrichtung zur Steigerung des Sitzkomforts bei Fahrzeugen, insbesondere Nutzfahrzeugen, wie Traktoren, Lastkraftwagen und Baumaschinen mit einem Fahrzeugaufbau, einer daran befestigten Kabine, in der ein insbesondere mittels einer Scherenmechanik befestigter, relativ dazu annähernd vertikal beweglicher Sitz angeordnet ist, und einem Fluidgetriebe, bestehend aus einem Generator, einer Fluidleitung und einem auf die annähernd vertikalen Sitzbewegungen wirkenden, die vertikale Position des Sitzes verändernden Motor.

Vorrichtungen der gattungsgemäßen Art sollen - insbesondere bei Nutzfahrzeugen - den Sitzkomfort durch Verringerung bzw. Dämpfung der durch Bodenunebenheiten erzeugten und über das Fahrwerk auf den Fahrzeugaufbau übertragenen vertikalen Beschleunigungen erhöhen. Dies ist bei Fahrzeugen der erwähnten Art einerseits deswegen besonders veranlaßt, weil derartige Fahrzeuge oft über unebene Wegstrecken oder auf unbefestigten Wegen gefahren werden, andererseits deswegen, weil ihre Fahrer - oft von Berufs wegen - nicht selten ihre gesamte Arbeitszeit mit dem Lenken der Fahrzeuge verbringen. Eine Erhöhung des Sitzkomforts bei derartigen Fahrzeugen ist daher nicht nur bloßer Luxus, sondern unter arbeitsmedizinischen und ergonomischen Gesichtspunkten angezeigt; sie wird letztlich vielfach der Steigerung der Arbeitsleistung zugute kommen. Viele berufsmäßige Führer derartiger Fahrzeuge leiden bekanntlich an Schäden der Zwischenwirbelscheiben, die durch die oben erwähnten vertikalen Beschleunigungen verursacht werden.

Aus der US-PS 4, 729, 538 ist eine Vorrichtung gattungsgemäßer Art bekannt, bei der ein Fahrzeugsitz vertikal nach unten verschoben wird, falls das Fahrzeug ein Hindernis überfährt. Ein Generator wird durch die Relativbewegung zwischen dem Fahrzeugaufbau und dem Fahrwerk angetrieben und ist über eine Fluidleitung mit einem am Sitz montierten, die Sitzhöhe verschiebenden Motor verbunden. Der Sitz wird nach unten verstellt, falls sich das Fahrwerk dem Aufbau des Fahrzeugs nähert, während seine Position nicht verändert wird, falls das Fahrzeug in eine Bodenvertiefung hineinfährt.

Die GB-A20 55 711 beschreibt ebenfalls eine Vorrichtung gattungsgemäßer Art, jedoch wird der Sitz nach oben verschoben, falls das Fahrwerk eine Bodenvertiefung erreicht.

Bei jenen Fahrzeugen, bei denen das Fahrwerk starr am Fahrzeugaufbau befestigt ist, kann der soeben geschilderte Erfindungsgedanke nicht verwirklich werden. Daher sind bei ihnen derartige Vorrichtungen zur Steigerung des Sitzkomforts bisher unbekannt.

Die Erfindung hat es sich nunmehr zur Aufgabe gemacht, eine Vorrichtung für Fahrzeuge mit starr am Fahrwerk befestigtem Fahrzeugaufbau zu schaffen, bei der Fahrersitz und Fahrer nahezu keinen durch Bodenunebenheiten ausgelösten Vertikalbeschleunigungen ausgesetzt sind.

Diese Aufgabe wird erfindungsgemäß dadurch gelöst, daß die Kabine relativ zum Fahrzeugaufbau verschiebbar ist, daß der Generator durch die Relativbewegung zwischen Fahrzeugaufbau und Kabine angetrieben wird, und daß der Motor den Abstand Sitz - Kabine proportional dem Abstand Kabine - Fahrzeugaufbau verändert.

Fluide - also Flüssigkeiten oder Gase - eignen sich zur Übertragung von Energie durch Transport der spezifisichen Energie im Massenstrom. Derartige Getriebe sind in der Technik weit verbreitet. Durch Anwendung hoher Energiedichte (Druck) lassen sich mit derartigen Getrieben bekanntlich große Kräfte bei translatorischen Bewegungen mit kleinen Baugrößen der Gesamteinheit erzeugen bzw. übertragen. Der bei hohem Druck niedrige Volumenstrom ist mit Steuergeräten kleiner Abmessung zu schalten und verursacht nur niedrige Übertragungsverluste. Bei der vorgeschlagenen Lösung wird der Fluidstrom durch einen Generator erzeugt, der seinerseits durch die Relativbewegungen der Kabine zum Fahrzeugaufbau bzw. Fahrzeugrahmen angetrieben wird. Der von diesem Generator erzeugte Fluidstrom ist also diesen Relativbewegungen proportional. Durch die Fluidleitung wird der Fluidstrom auf den Motor übertragen, der seinerseits auf den Sitz wirkt und den Abstand des Sitzes relativ zur Kabine im Sinne eines Vibrationsausgleiches dämpft. Die Relativbewegung der Kabine zum Fahrzeug wird also zur Energieerzeugung genutzt, die eine Relativverstellung zwischen Kabine und Sitz entsprechend den momentan vorliegenden Bodenunebenheiten zur Folge hat. Nach alledem stellt sich der Vorteil der erfindungsgemäßen Lösung so dar, daß bei einer durch Bodenunebenheiten ausgelösten, nach oben oder abwärts gerichteten Vertikalbeschleunigung eine Ausgleichsbewegungin die Gegenrichtung stattfindet. Damit kann bei geeigneter Auslegung von Generator und Motor erreicht werden, daß der Sitz von Vertikalbeschleunigungen unterhalb einer gewissen Größe der auslösenden Bodenunebenheiten nahezu völlig frei bleibt.

In einer Abwandlung der Erfindung wird zudem vorgeschlagen, daß der Generator aus einer Hubkolbenpumpe und der Motor aus einem doppelt wirkenden Schubmotor, insbesondere einem Balg oder Differentialzylinder besteht. Der damit erzielte Vorteil besteht darin, daß die Erfindung mittels bekannter und bewährter Elemente der fluidischen Energieübertragung realisiert wird. Die Hubkolbenpumpe kann hier derart angeordnet werden, daß sich das in ihrem Hubraum eingeschlossene Volumen bei einer Vergrößerung des Abstandes zwischen Kabine und Fahrzeugaufbau verringert. Der dadurch erzeugte Fluidstrom bewirkt über den Schubmotor dann eine Bewegung des Sitzes relativ zur Kabine nach oben. Analog erfolgt dieser Prozeß umgekehrt bei einer Verringerung des Abstandes zwischen Kabine und Fahrzeugaufbau.

Der erfindungsgemäß vorgeschlagene Aufbau erfüllt Ausgleichsfunktionen dadurch, daß die sich aufbauenden Gegenkräfte umso stärker ausgeprägt sind, je tiefer die Position des Sitzes ist. Um diese vorteilhafte Charakteristik besser zu nutzen, wird deshalb in einer Weiterentwicklung der Erfindung die zusätzliche Anbringung eines Ausgleichsgefäßes an dem die vertikale Position des Sitzes bestimmenden Balg vorgeschlagen. Es entsteht so ein der Pneumatik zur Verfügung stehendes Zusatzvolumen. Das Ergebnis ist ein höherer Speicherdruck bei großem Volumen, d.h. der Federweg wird größer und es läßt sich zudem ein größerer Gegendruck einstellen. Weiter ist die Rückführung der Luft langsamer, so daß die Rückbewegung des Sitzes insgesamt - ebenso wie bei der Belastung - langsamer erfolgt und vor sich geht.

Weiterhin ist bevorzugt, das als Fluid Öl, insbesondere Hydrauliköl oder Gase, insbesondere Luft Verwendung finden.
Auch die hier vorgeschlagenen Stoffe sind in Fluidgetrieben in der Technik weit verbreitet, bekannt und bewährt.

In einer zweckmäßigen Weiterbildung ist vorgesehen, die erfindungsgemäße Vorrichtung sowohl rechts als auch links von der durch die Fahrtrichtung definierten Mittelachse des Fahrzeuges anzuordnen, Vorrichtungen also, die völlig unabhängig auf der rechten und linken Seite den vertikalen Höhenausgleich vornehmen. Entscheidend ist, daß bei unterschiedlich gemessenen Abständen zwischen Kabine und Aufbau eine unterschiedliche Einstellung des Sitzes in der Vertikalen erfolgt, so daß im Ergebnis eine Ausrichtung des Sitzes zwischen der rechten und linken Fahrzeugseite erfolgen kann.

Beim Anfahren eines Hindernisses durch ein Fahrzeug erfolgt die Kraftübertragung unmittelbarer und direkter und wird subjektiv als unmittelbar empfunden. Bewegt sich das Fahrzeug in eine Bodenvertiefung hinein, geschieht die Kraftübertragung wesentlich langsamer, so daß sie subjektiv als weicher empfunden wird. Um hier einen Ausgleich zu schaffen, wird eine Fluidleitung, die aus zwei parallelen hydraulischen Leitungen besteht, vorgeschlagen, die jeweils in unterschiedlichen Richtungen beaufschlagt werden. Sie werden so eingestellt, daß die Durchflußmenge in jeder Richtung unterschidlich ist. Die Folge ist, daß die Zeitkonstante für die Ausgleichsbewegungen unterschiedlich ist und demzufolge die Einstellung des gleichen Fahrkomforts zulassen, unabhängig davon, ob das Fahrzeug gegen ein Hindernis oder in eine Bodenvertiefung fährt.

In einer weiteren Ausbildung der Erfindung ist daran gedacht, daß zwischen Generator und Motor eine Steuerung mit einem die Stärke des Fluidstromes regelnden Ventil angeordnet ist.
Die Vorteile einer derartigen Steuerungseinrichtung liegen in einer dadurch ermöglichten Feinabstimmung oder elektronisch geregelten Ausführung der Sitzbewegungen. Es ist hier an Einrichtungen zu denken, die die durch den Motor bewirkten Sitzbewegungen gegenüber den Fahrzeugaufbau-Kabinenbewegungen zeitlich verzögern und so das Ausgleichsverhalten der erfindungsgemäßen Vorrichtung weiter verbessern. Sofern das Ventil von außen einstellbar ist, ist eine nachträgliche Einstellung und Anpassung an das Körpergewicht des Fahrers sowie dessen persönliche und subjektive Bedürfnisse möglich.

Weiter wird vorgeschlagen, daß eine Fußstütze am Sitz starr befestigt ist.
Hiermit wird erreicht, daß auch die Beine des Fahrzeugführers Beschleunigungen nicht mehr ausgesetzt sind, soweit er sie auf der Fußstütze abstellt.

Weiterhin ist bevorzugt, daß der Sitz auf einer Bodenplatte befestigt ist, die wiederum über Dämpfungselemente, vorzugsweise aus einem Gummisegmentklotz mit Feder mit dem Fahrzeugaufbau verbunden ist.
Der damit erzielte Vorteil besteht in der Elimination hochfrequenter Schwingungen, die vom Motor erzeugt auf den Fahrer einwirken könnten. Weiterhin entsteht so eine zusätzliche Federung, die ein einseitiges Abfedern bei einseitigem Fahren über eine Bodenunebenheit sicherstellt. Zur Ausschaltung der damit verbundenen Querbeschleunigungen ist die unter Anspruch 1 beschriebene Erfindung alleine nicht in der Lage.

Schließlich wird vorgeschlagen, daß die Einrichtungen zur Fahrzeugsteuerung, insbesondere Pedale und Lenkrad raumfest mit dem Sitz verbunden sind oder mit den Sitzbewegungen mitgeführt werden.

Auch der hierdurch erzielte Vorteil ist offensichtlich. Der Fahrer ist damit von Relativbewegungen des Fahrzeugaufbaus nahezu vollständig abgekoppelt. Auch seine zur Fahrzeugbedienung benötigten Füße und Hände sind derartigen Beschleunigungen nicht mehr ausgesetzt.

Weitere Einzelheiten, Merkmale und Vorteile der Erdindung lassen sich dem nachfolgenden Beschreibungsteil entnehmen, in dem ein Ausführungsbeispiel der Erfindung dargestellt ist.

Die erfinderische Vorrichtung umfaßt den Fahrzeugaufbau, sowie die relativ dazu bewegliche Kabine und den im Ausführungsbeispiel mit einer Scherenmechanik daran relativ dazu beweglich befestigten Sitz. Vorhanden ist weiterhin ein Fluidgetriebe, das aus einem Generator, einer Fluidleitung und einem auf die vertikalen Sitzbewegungen wirkenden Motor besteht. Im Ausführungsbeispiel besteht der Generator aus einer Hubkolbenpumpe. Der Motor ist hier ein Balg, also ein doppelt wirkender Schubmotor, dessen Bewegungsrichtung von der wechselnden Beaufschlagung abhängt. Weiterhin ist die Steuerungseinrichtung vorhanden, die zwischen Fluidleitung und Motor angeordnet ist. Am Sitz ist eine Fußstütze starr befestigt.

Bei Vergrößerung des Abstandes zwischen Kabine und Fahrzeugaufbau wird das im Hubraum der Hubkolbenpumpe eingeschlossene Volumen verringert und der dadurch erzeugte Fluidstrom über die Fluidleitung auf den Balg übertragen, der bewirkt, daß der Sitz eine entgegengesetzte Relativbewegung ausführt.

## Patentansprüche

1. Vorrichtung zur Steigerung des Sitzkomforts bei Fahrzeugen, insbesondere Nutzfahrzeugen, wie Traktoren, Lastkraftwagen und Baumaschinen mit einem Fahrzeugaufbau, einer daran befestigten Kabine, in der ein insbesondere mittels einer Scherenmechanik befestigter, relativ dazu annährend vertikal beweglicher Sitz angeordnet ist und einem Fluidgetriebe bestehend aus einem Generator, einer Fluidleitung und einem auf die annähernd vertikalen Sitzbewegungen wirkenden, die vertikale Position des Sitzes verändernden Motor, **dadurch gekennzeichnet**, daß die Kabine relativ zum Fahrzeugaufbau verschiebbar ist, daß der Generator durch die Relativbewegung zwischen Fahrzeugaufbau und Kabine angetrieben wird, und
daß der Motor den Abstand Sitz - Kabine proportional dem Abstand Kabine - Fahrzeugaufbau verändert.

2. Vorrichtung nach Anspruch 1, **dadurch gekennzeichnet**, daß der Generator eine Hubkolbenpumpe und der Motor ein doppelt wirkender Schubmotor, insbesondere ein Balg oder ein Differentialzylinder ist.

3. Vorrichtung nach Anspruch 2, **dadurch gekennzeichnet**, daß der Balg mit einem ein- oder mehrkammerigen Ausgleichsgefäß in Verbindung steht.

4. Vorrichtung nach einem der Ansprüche 1 bis 3, **dadurch gekennzeichnet**, daß als Fluid Öl, insbesondere Hydrauliköl oder Gase, insbesondere Luft Verwendung finden.

5. Vorrichtung nach einem der Ansprüche 1 bis 4, **dadurch gekennzeichnet**, daß zwischen Generator und Motor eine Steuerung mit einem die Stärke des Fluidstromes regelnden Ventil angeordnet ist.

6. Vorrichtung nach einem der Ansprüche 1 bis 5, **dadurch gekennzeichnet**, daß rechts und links von der Mittelachse des Fahrzeugs jeweils eine Vorrichtung gemäß Anspruch 1 bis 5 angeordnet ist, die auf die Position des Sitzes einwirkt.

7. Vorrichtung nach einem der Ansprüche 1 bis 6, **dadurch gekennzeichnet**, daß die Fluidleitung aus zwei parallelen Leitungen besteht, die in entgegengesetzten Richtungen beaufschlagt sind und unterschiedliche Durchlaßquerschnitte aufweisen.

8. Vorrichtung nach einem der Ansprüche 1 bis 7, **dadurch gekennzeichnet**, daß eine Fußstütze am Sitz starr befestigt ist.

9. Vorrichtung nach einem der Ansprüche 1 bis 8, **dadurch gekennzeichnet**, daß der Sitz auf einer Bodenplatte befestigt ist, die wiederum über Dämpfungselemente, vorzugsweise bestehend aus einem Gummisegmentklotz mit Feder, mit dem Fahrzeugaufbau verbunden ist.

10. Vorrichtung nach einem der Ansprüche 1 bis 9, **dadurch gekennzeichnet**, daß die Einrichtungen zur Fahrzeugsteuerung, insbesondere Pedale und Lenkrad raumfest mit dem Sitz verbunden sind oder mit den Sitzbewegungen mitgeführt werden.
